## Europäisches Patentamt
## European Patent Office
## Office européen des brevets

(19)

(11) Numéro de publication: **0 044 769**
**B1**

(12) ## FASCICULE DE BREVET EUROPEEN

(45) Date de publication du fascicule du brevet:
**23.01.85**

(51) Int. Cl.⁴: **A 01 K 11/00**, B 25 B 7/20

(21) Numéro de dépôt: **81401099.7**

(22) Date de dépôt: **08.07.81**

(54) **Outil universel pour la pose de boucles d'identification du bétail.**

(30) Priorité: **21.07.80 FR 8016012**

(43) Date de publication de la demande:
**27.01.82 Bulletin 82/4**

(45) Mention de la délivrance du brevet:
**23.01.85 Bulletin 85/4**

(84) Etats contractants désignés:
**BE CH DE GB IT LI NL**

(56) Documents cités:
**DE - A - 2 326 288**
**FR - A - 2 417 937**
**FR - A - 2 445 106**
**FR - A - 2 464 643**
**GB - A - 895 915**
**GB - A - 2 044 684**
**US - A - 3 641 804**

(73) Titulaire: **CHEVILLOT, 119 Rue Vieille du Temple, F-75003 Paris (FR)**

(72) Inventeur: **Chevillot, Gabriel, 119, rue Vieille du Temple, F-75003 - Paris (FR)**

(74) Mandataire: **CABINET BONNET-THIRION, 95 Boulevard Beaumarchais, F-75003 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

**Description**

La présente invention se rapporte à un outil pour la pose de boucles d'identification du bétail, ces boucles étant du type comportant deux parties emboîtables l'une dans l'autre: une partie dite mâle ayant une tige creuse pointue adaptée à traverser l'oreille de l'animal, et une partie dite femelle ayant un oeillet adapté à recevoir de manière verrouillée la pointe de la tige de la partie mâle. L'outil habituellement prévu pour la pose de boucles de ce genre comporte deux mors qui sont articulés l'un sur l'autre et dont l'un présente un pointeau, de préférence interchangeable, adapté à recevoir la tige creuse de la partie mâle tandis que le deuxième présente un logement adapté à recevoir l'oeillet de la partie femelle.

On a déjà proposé, par exemple dans le GB-A-895 915, le US-A-3 641 804 et le DE-A-2 326 288, de définir le logement présenté par le deuxième mors, par un couvercle articulé sur ce mors et soulevable élastiquement, soit troué, soit de forme fourchue, adapté à serrer axialement l'oeillet.

Mais cette disposition ne permet pas, lorsque l'oeillet est muni d'une jupe de protection qui s'étend dans le prolongement de l'oeillet et qui est destinée à entourer la pointe de la partie mâle, de rendre l'outil utilisable pour la pose de toutes sortes de boucles dont le diamètre de la jupe de l'oeillet est plus ou moins important.

La présente invention a pour objet un outil, du type sus-indiqué pour la pose de boucles d'identification du bétail, de diverses formes de dimensions, et dont l'oeillet est muni d'une jupe de protection plus ou moins large.

Suivant l'invention, cet outil est caractérisé en que le logement présenté par le deuxième mors, comporte, outre le couvercle soulevable, des moyens de positionnement s'adaptant à divers diamètres de la jupe de protection et destinés à ceinturer cette jupe.

Grâce à cette disposition, l'outil suivant l'invention peut être utilisé, d'une manière efficace, pour la pose de toutes sortes de boucles de diverses formes et dimensions, la tige de la partie mâle pouvant être quelconque tandis que l'oeillet peut avoir une épaisseur et un diamètre variables. L'outil s'adapte à des jupes de divers diamètres et rien n'empêche d'ailleurs, à plus forte raison, de l'utiliser, si on le désire, pour la pose de boucles dont l'oeillet est exempt de jupe.

Dans une forme d'exécution, les moyens de positionnement comportent une pince élastique adaptée à serrer latéralement la jupe de l'oeillet. Ainsi le logement s'adapte automatiquement à des jupes d'oeillets de divers diamètres.

Dans une variante de réalisation, les moyens de positionnement comportent un perçage choisi parmi plusieurs perçages de divers diamètres ménagés dans un organe monté mobile, par exemple tournant ou coulissant, sur le deuxième mors, chaque perçage étant adapté à recevoir une jupe de l'oeillet de manière centrée.

Des formes d'exécution de l'invention sont ci-après décrites à titre d'exemple en référence aux dessins annexés dans lesquels:

la figure 1 est une vue partielle en perspective d'un outil universel suivant l'invention pour la pose de boucles d'identification du bétail;

la figure 2 est une vue en élévation d'une pince élastique montée sur un des mors de l'outil pour serrer latéralement de manière centrée une des deux parties de la boucle;

la figure 3 montre en perspective la boucle constituée d'une partie mâle et d'une partie femelle avant la pose sur une oreille de l'animal;

la figure 4 est une vue en coupe transversale de la boucle posée sur l'oreille de l'animal;

la figure 5 est une vue analogue à la figure 2 mais concerne une variante de pince élastique;

la figure 6 concerne une autre variante et montre un barillet ayant plusieurs perçages de diamètres différents en élévation suivant la ligne VI-VI de la figure 7;

la figure 7 est une vue correspondante de ce barillet suivant les flèches VII-VII de la figure 6;

la figure 8 concerne une autre variante comportant un tiroir pourvu de plusieurs perçages de divers diamètres, en élévation suivant la ligne VIII-VIII de la figure 9;

les figures 9 et 10 sont des vues de ce tiroir respectivement suivant les flèches IX-IX et suivant les flèches X-X de la figure 8;

la figure 11 concerne une autre variante de tiroir.

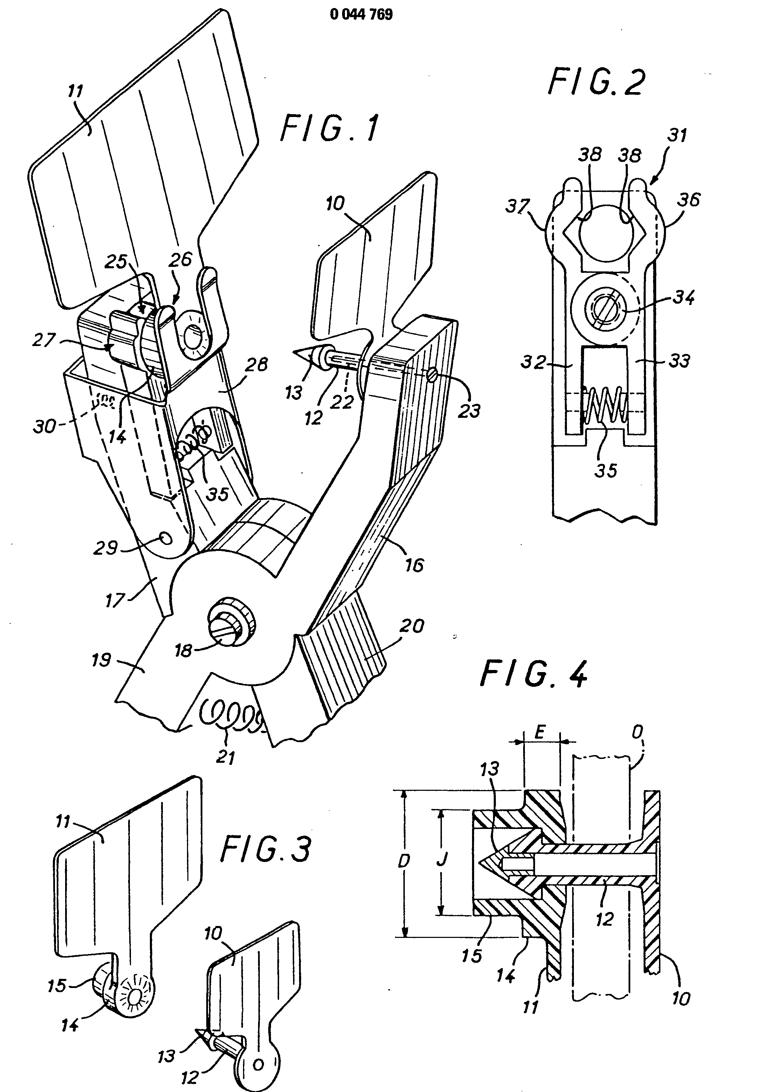

On se référera d'abord aux figures 1 à 4 qui concernent une application de l'invention à un outil pour la pose de boucles d'identification du bétail.

Une telle boucle (figure 3) comporte deux parties 10 et 11 emboîtables l'une dans l'autre: une partie dite mâle 10 ayant une tige creuse 12 pointue en 13 et adaptée à traverser l'oreille de l'animal; et une partie dite femelle 11 ayant un oeillet 14 adapté à recevoir de manière verrouillée la pointe 13 de la tige 12 de la partie mâle.

On voit à la figure 4 la boucle formée de deux parties 10 et 11 telle que posée sur l'oreille O de l'animal. La tige 12 de la partie mâle 10 a traversé l'oreille de l'animal et sa pointe 13 est passée de manière verrouillé derrière l'oeillet 14 de la partie femelle 11.

On voit à la figure 4 en E l'épaisseur de l'oeillet 14 et en D le diamètre de l'oeillet 14.

En outre, dans l'exemple représenté à la figure 4 la partie femelle 11 est pourvue d'une jupe cylindrique de protection 15 qui prolonge axialement l'oeillet 14 de façon à entourer la pointe 13 et éviter les risques de blessure par cette point 13.

On voit en J le diamètre de cette jupe 15.

Il existe dans le commerce différents modèles de boucles d'identification du bétail dans lesquels la tige 12 est plus ou moins longue et plus ou moins épaisse, tandis que l'épaisseur E et le diamètre D de l'oeillet 14 de la partie femelle 11 ont différentes valeurs. En outre, il existe des modèles qui sont pourvus de la jupe de protection 15 ainsi qu'il est représenté à la figure 4 mais il existe également d'autres modèles qui sont exempts d'une telle jupe de protection.

Suivant l'invention, un outil pour la pose de boucles d'identification du bétail permet facilement et automatiquement une telle pose avec des boucles de divers modèles, et de diverses formes et dimensions.

L'outil suivant l'invention (figures 1 et 2) a une forme générale de tenaille avec deux mors 16 et 17 qui sont articulés l'un sur l'autre en 18 et qui sont prolongés par des branches de préhension et d'actionnement 19 et 20, tandis qu'un ressort 21 agissant entre les branches 19 et 20 tend à rappeler l'outil en position ouverte.

Le mors 16 présente un pointeaus 22 adapté à recevoir la tige creuse 12 de la partie mâle 10. Ce pointeau 22 est monté de façon interchangeable sur le mors 16, par exemple au moyen d'un montage vissé 23.

Le mors 17 présente un logement 25 adapté à recevoir l'oeillet 14 de la partie femelle 11.

Le logement 25 comporte des moyens 26, 27 de réglage tant en profondeur qu'en largeur, adaptés à assurer un centrage automatique de l'oeillet 14.

Plus particulièrement, le logement 25 est défini par un couvercle 28 articulé en 29 sur le mors 17 et soulevable contre la résistance d'un ressort 30. Le couvercle 28 comporte une partie active 26 de forme fourchue et galbée et adaptée à serrer l'oeillet 14 axialement de manière centrée. C'est le galbe de cette partie fourchue 26 qui tend à assurer un tel centrage automatique.

Il est à noter que cette partie fourchue 26 s'adapte à différentes valeurs d'épaisseur E de diamètre D d'oeillet 14 et ceci grâce au fait que le couvercle 28 est soulevable élastiquement et au fait que la fourche 26 dégage latéralement un espace libre dans lequel peut s'étendre l'oeillet 14 même s'il a un diamètre D important.

En outre l'outil représenté aux figures 1 et 2 comporte des moyens de positionnement coopérant avec la jupe 15 de l'oeillet 14 de la partie femelle 11 lorsque celle-ci est du modèle comportant une telle jupe 15.

A cet effet, le logement 25 comporte une pince élastique 31 (figures 1 et 2) adaptée à serrer latéralement la jupe 15 de l'oeillet 14.

Dans l'exemple représenté à la figure 2 cette pince élastique 31 comporte deux branches 32 et 33 articulées l'une sur l'autre en 34 et adaptées à s'ouvrir contre la résistance d'un ressort 35. Les branches 32 et 33 sont prolongées par des mors 36 et 37 ayant un profil intérieur angulaire 38 pour assurer le centrage automatique de la jupe 15 qui est adaptée à être serrée latéralement entre les mors 36 et 37 de la pince 31, le diamètre de la jupe pouvant être plus ou moins important.

Pour poser une boucle d'identification sur l'oreille de l'animal, on choisit d'abord un pointeau 22 qui correspond à la tige 12 de la partie mâle 10 et l'on visse ce pointeau 22 en 23 sur le mors 16 de l'outil.

On positionne la partie mâle 10 de la boucle sur le mors 16 de l'outil en engageant la tige creuse 12 sur ce pointeau 22. On glisse l'oeillet 14 de la partie femelle sous la partie fourchue 26 de couvercle 28 ce qui assure automatiquement le centrage de l'oeillet 14 sur le mors 17. Lorsque l'oeillet 14 est exempt de jupe de protection 15 le centrage est simplement assuré par engagement de l'oeillet 14 sous la partie fourchue 26 du couvercle 28. Lorsque l'oeillet 14 est pourvu d'une jupe de protection, le positionnement est complété par le fait que la jupe 15 est engagée entre les mors 36 et 37 de la pince 31, ce qui complète en outre le positionnement par serrage latéral de cette jupe 15 sous l'action du ressort 35.

Il suffit dès lors de placer l'oreille O de l'animal entre la pointe 13 et l'oeillet 14 et de serrer l'outil par rapprochement des deux branches 19 et 20. La pointe 13 et la tige 12 traversent l'oreille O de l'animal et la pointe 13 franchit l'oeillet 14 en devenant verrouillée sur celui-ci comme représenté à la figure 4.

Il suffit alors de dégager l'outil de la boucle 10, 11.

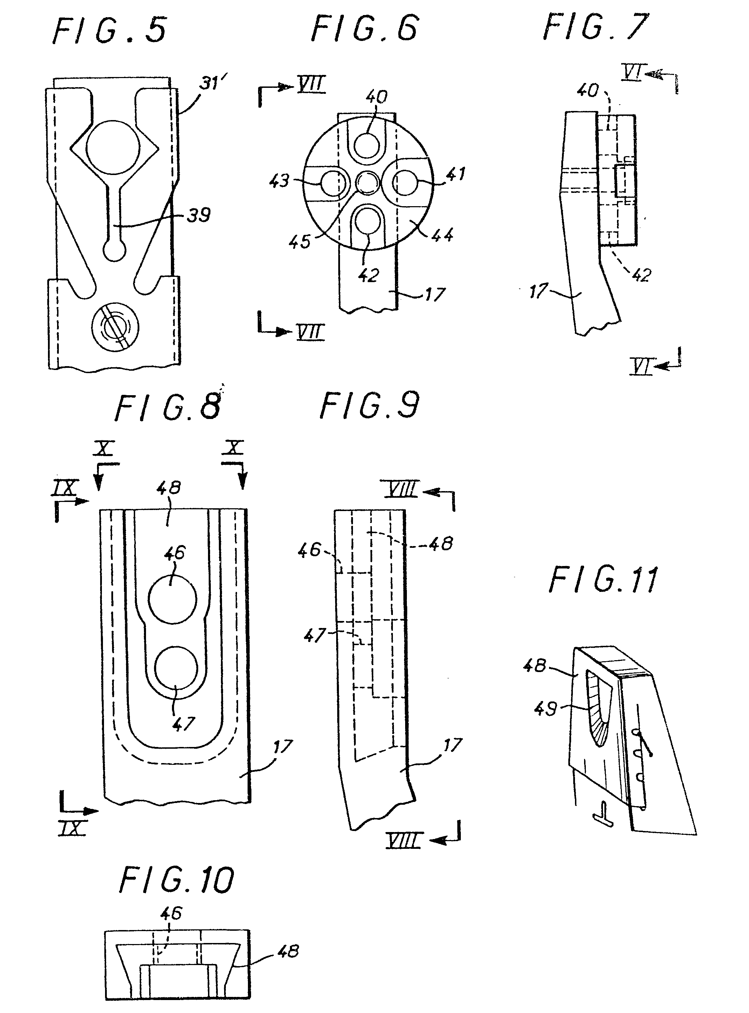

Dans la variante illustrée à la figure 5, la disposition est analogue à celle qui a été décrite en référence aux figures 1 à 4 et on reconnaît en 31' la pince de positionnement et de serrage latérale de la jupe 15. Mais ici cette pince 31' a une action de serrage qui résulte non pas d'un ressort tel que le ressort 35 mais de la nature de la matière de la pince 31' et de sa forme fendue en 39.

Dans une autre variante (figures 6 et 7) le logement 25 comporte un perçage choisi parmi plusieurs perçages 40, 41, 42, 43 de divers diamètres ménagés dans un barillet 44 monté tournant en 45 sur le mors 17. Il suffit de régler la position angulaire du barillet 44 pour présenter celui des perçages 40, 41, 42, 43 qui correspond au diamètre de la jupe 15 de la partie femelle 11.

Dans une autre variante (figures 8, 9 et 10) le logement 25 comporte un perçage choisi parmi plusieurs perçages 46, 47 de divers diamètres ménagés dans un tiroir 48 qui est monté coulissant sur le mors 17. Il suffit de faire coulisser le tiroir 48 pour présenter celui des logements 46 et 47 qui correspond au diamètre de la jupe 15 de la partie femelle 11.

Dans une autre variante (figure 11) la disposition est analogue à celle qui vient d'être décrite en référence aux figures 8 à 10 et le logement 25 comporte toujours un tiroir 48 mais les perçages de divers diamètres 46 et 47 sont remplacés par une lumière oblongue 49 en forme de coin de façon à présenter une largeur variable en fonction de la position du tiroir 48 en vue d'adapter cette largeur au diamètre J de la jupe 14 de la partie femelle 11.

L'invention n'est bien entendu pas limitée aux détails des formes de réalisation ci-dessus décrites à titre d'exemples. Ainsi, il est possible d'adopter diverses formes et dimensions pour la réalisation de la pince de positionnement et de serrage latérale de la jupe, en fonction notamment des propriétés élastiques du matériau mis en oeuvre. Les éléments amovibles (barillets et tiroirs) sont bien entendu également interchangeables pour adaptation à des oeillets et/ou jupes de divers calibres.

## Revendications

1. Outil pour la pose de boucles d'identification du bétail, de diverses formes et dimensions, ces boucles étant du type comportant deux parties emboîtables l'une dans l'autre, une partie dite mâle (10) ayant une tige creuse pointue (12) adaptée à traverser l'oreille de l'animal et une partie dite femelle (11) ayant un oeillet (14) muni d'une jupe de protection (15) et adapté à recevoir de manière verrouillée la pointe (13) de la tige (12) de la partie mâle (10), outil comportant deux mors (16, 17) qui sont articulés l'un sur l'autre et dont l'un présente un pointeau (22) adapté à recevoir la tige creuse (12) de la partie mâle (10) tandis que le deuxième présente un logement (25) adapté à recevoir l'oeillet (14) de la partie femelle (11), outil dans lequel, le pointeau (22) est monté de façon interchangeable sur le premier mors (16), tandis que le logement (25) est défini par un couvercle (28) articulé mors et soulevable elastiquement, de forme fourchue, et adapté à serrer axialement l'oeillet (14), qui peut être plus ou moins épais, outil caractérisé en ce que le logement (25) comporte, en outre, des moyens de positionnement (31, 44, 48) s'adaptant à divers diamètres de la jupe de protection (15) et destinés à ceinturer cette jupe.

2. Outil suivant la revendication 1, caractérisé en ce que les dits moyens de positionnement comportent une pince élastique (31, 31') adaptée à serrer la jupe (15) de l'oeillet (14).

3. Outil suivant la revendication 1, caractérisé en ce que les dits moyens de positionnement comportent un perçage choisi parmi plusieurs perçages (40, 41, 42, 43; 46, 47) de divers diamètres ménagés dans un organe (44; 48) monté mobile sur le deuxième mors, chaque perçage étant adapté à recevoir la jupe (15) de l'oeillet (14) d'une manière centrée.

4. Outil suivant la revendication 3, caractérisé en ce que ledit organe mobile est un barillet amovible (44) monté tournant sur le deuxième mors.

5. Outil suivant la revendication 3, caractérisé en ce que ledit organe mobile est un tiroir (48) monté coulissant sur le deuxième mors, ce tiroir étant interchangeable.

## Patentansprüche

1. Werkzeug zum Einsetzen von Ohrmarken verschiedener Formen und Größen von Vieh, wobei die Marken zwei ineinander steckbare Teile aufweisen, von denen ein sogenanntes männliches Teil (10) einen spitz zulaufenden hinterschnittenen Stift (12) aufweist, zum Durchgang durch das Ohr eines Tieres und ein sogenanntes weibliches Teil (11) mit einer Öse (14) versehen ist, die mit einer Schutzabdeckung (15) ausgebildet ist und die der Aufnahme der Spitze (13) des Stiftes (12) des männlichen Teiles (10) in Form einer Verriegelung dient, wobei das Werkzeug zwei Backen (16, 17) aufweist, die gelenkig miteinander verbunden sind und von denen einer einen Haltestift (22) zur Aufnahme des hinterschnittenen Stiftes (12) des männlichen Teiles (10) aufweist, während der zweite Backen eine Aufnahme (25) zur Aufnahme der Öse (14) des weiblichen Teils (11) aufweist, wobei der Haltestift (22) auswechselbar an den ersten Backen (16) angeordnet ist, während die Aufnahme (25) bestimmt ist durch eine Abdeckung (28), die an dem Backen angelenkt und elastisch anhebbar ist und eine gegabelte Form aufweist und in welcher in Axialrichtung die Öse (14) gehalten wird, welche mehr oder weniger dick sein kann, dadurch gekennzeichnet, daß die Aufnahme (25) außerdem eine Positioniereinrichtung (31, 44, 48) aufweist, die sich an verschiedene Durchmesser der Schutzabdeckung (15) anpassen kann und mit welcher diese Abdeckung festgeklemmt wird.

2. Werkzeug nach Anspruch 1, dadurch gekennzeichnet, daß die Positioniereinrichtung eine elastische Klemme (31, 31') aufweist zum Festklemmen der Abdeckung (15) der Öse (14).

3. Werkzeug nach Anspruch 1, dadurch gekennzeichnet, daß die Positioniereinrichtung eine Lochung aufweist, die aus einer Vielzahl verschiedener Lochungen (40, 41, 42, 43; 46, 47) mit verschiedenen Durchmessern ausgewählt ist, die in einem Element (44; 48) vorgesehen sind, das beweglich an dem zweiten Backen angeordnet ist, und daß jede Lochung zur zentrierten Aufnahme der Abdeckung (15) der Öse (14) vorgesehen ist.

4. Werkzeug nach Anspruch 3, dadurch gekennzeichnet, daß das bewegliche Element ein abnehmbares Federblech (44) ist, das drehbar auf dem zweiten Backen angeordnet ist.

5. Werkzeug nach Anspruch 3, dadurch gekennzeichnet, daß das bewegliche Element ein Schieber (48) ist, der verschiebbar auf dem zweiten Backen angeordnet ist, und daß der Schieber auswechselbar ist.

## Claims

1. Tool for fitting cattle identification tags of various shapes and dimensions, these tags being of the type comprising two interengaging parts, one so-called male part (10) having a pointed hollow rod (12) adapted to pass through the animal's ear, and a so-calles female part (11) having an eyelet (14) provided with a protective skirt (15) and adapted to receive and lock the tip (13) of the rod (12) of the male part (10), the said tool comprising two jaws (16, 17) which are articulated one on the other and one of which has a pin (22) adapted to receive the hollow rod (12) of the male part (10), while the second jaw has a socket (25) adapted to receive the eyelet (14) of the female part (11), in which tool the pin (22) is mounted interchangeably on the first jaw (16), while the socket (25) is formed by a cover (28) articulated on the jaw, adapted to be raised resiliently, having a forked shape, and adapted to grip axially the eyelet (14), which may be more or less thick, the tool being characterised in that the socket (25) has in addition positioning means (31, 44, 48) adaptable to various diameters of the protective skirt (15) and intended for encircling the said skirt.

2. Tool according to Claim 1, characterised in that the said positioning means comprise a resilient gripper (31, 31') adapted to grip the skirt (15) of the eyelet (14).

3. Tool according to Claim 1, characterised in that the said positioning means comprises one bore selected from a plurality of bores (40, 41, 42, 43; 46, 47) of various diameters, provided in a member (44; 48) mounted movably on the second jaw, each bore being adapted to receive the skirt (15) of the eyelet (14) in a centred position.

4. Tool according to Claim 3, characterised in that the said movable member is a detachable drum (44) mounted for rotation on the second jaw.

5. Tool according to Claim 3, characterised in that the said movable member is a slide (48) mounted for sliding on the second jaw, this slide being interchangeable.

0 044 769

FIG.1

FIG.2

FIG.3

FIG.4

7

0 044 769

FIG.5

FIG.6

FIG.7

FIG.8

FIG.9

FIG.11

FIG.10

9